# FASCICULE DE BREVET EUROPEEN

(11) **EP 1 883 578 B1**
(45) Date de publication et mention de la délivrance du brevet: **01.08.2012**
(21) Numéro de dépôt: 06794449.6
(22) Date de dépôt: 22.05.2006
(51) Int. Cl.: B64C 27/18

(54) **Ensemble moteur pour aéronef**
Triebwerkanordnung für Flugzeuge
Engine assembly for aircraft

(30) Priorité: 23.05.2005 FR 0551331
(43) Date de publication de la demande: 06.02.2008
(73) Titulaire: AIRBUS OPERATIONS, 31060 Toulouse (FR)
(72) Inventeur: DIOCHON, Lionel, F-31000 Toulouse (FR); SARRATO, Michael, E-28045 Madrid (ES); CHARTIER, David, F-31100 Toulouse (FR); PETRISSANS, Isabelle, F-31400 Toulouse (FR)
(74) Mandataire: Ilgart, Jean-Christophe
(86) Numéro de dépôt international: PCT/FR2006/050467
(87) Numéro de publication internationale: WO 2007/000544

(56) Documents cités:
- FR-A- 2 799 432
- US-A- 3 848 832
- US-A- 3 979 087
- US-A- 4 266 741
- US-A- 6 126 110

## Description

### DOMAINE TECHNIQUE

La présente invention se rapporte de façon générale à un ensemble moteur pour aéronef avec un mât d'accrochage de turboréacteur . Ce type de mât d'accrochage, également appelé « EMS » (de l'anglais « Engine Mounting Structure »), permet de suspendre le turboréacteur au-dessous de la voilure de l'aéronef, ou bien de monter ce turboréacteur au-dessus de cette même voilure.

### ÉTAT DE LA TECHNIQUE ANTÉRIEURE

Un tel ensemble moteur pour aéronef avec un mât d'accrochage, comme celui connu de US-6126 110, qui montre toutes les caractéristiques du préambule de la revendication 1, est en effet prévu pour constituer l'interface de liaison entre un turboréacteur et une voilure de l'aéronef. Il permet de transmettre à la structure de cet aéronef les efforts générés par son turboréacteur associé, et autorise également le cheminement du carburant, des systèmes électriques, hydrauliques, et air entre le moteur et l'aéronef.

Afin d'assurer la transmission des efforts, le mât comporte une structure rigide, souvent du type « caisson », c'est-à-dire formée par l'assemblage de longerons supérieurs et inférieurs et de panneaux latéraux raccordés entre eux par l'intermédiaire de nervures transversales.

D'autre part, le mât est muni d'un système de montage interposé entre le turboréacteur et la structure rigide du mât, ce système comportant globalement au moins deux attaches moteur, généralement au moins une attache avant et au moins une attache arrière.

De plus, le système de montage comprend un dispositif de reprise des efforts de poussée générés par le turboréacteur. Dans l'art antérieur, ce dispositif prend par exemple la forme de deux bielles latérales raccordées d'une part à une partie arrière du carter de soufflante du turboréacteur, et d'autre part à une attache arrière fixée sur le carter central de ce dernier.

De la même façon, le mât d'accrochage comporte également un second système de montage interposé entre la structure rigide de ce mât et la voilure de l'aéronef, ce second système étant habituellement composé de deux ou trois attaches.

Enfin, le mât est pourvu d'une structure secondaire assurant la ségrégation et le maintien des systèmes tout en supportant des carénages aérodynamiques.

Comme cela a été évoqué ci-dessus, un mât d'accrochage classique de l'art antérieur prend grossièrement la forme d'un caisson parallélépipédique, disposant de grandes dimensions afin de pouvoir reprendre la totalité des efforts générés par le turboréacteur associé.

Ainsi, dans ce cas précis où le mât d'accrochage en forme de caisson de grandes dimensions est agencé à proximité du carter central du turboréacteur, ce mât provoque alors inéluctablement des perturbations importantes du flux secondaire s'échappant du canal annulaire de soufflante, ce qui se traduit directement par une traînée importante, ainsi que des pertes en termes de rendement du turboréacteur et de consommation de carburant.

De plus, ces perturbations sont accentuées par la présence du dispositif de reprise des efforts de poussée du type à bielles latérales, situées en sortie du canal annulaire de soufflante.

### EXPOSÉ DE L'INVENTION

L'invention a donc pour but de proposer un ensemble moteur pour aéronef avec un mât d'accrochage de turboréacteur tel que défini par les caractéristiques techniques de la revendication 1 et remédiant au moins partiellement aux inconvénients mentionnés ci-dessus relatifs aux réalisations de l'art antérieur, et également de présenter un aéronef disposant d'au moins un tel mât.

Pour ce faire, l'invention a pour objet un mât d'accrochage de turboréacteur pour aéronef, le mât disposant d'une structure rigide comportant un caisson central longitudinal, cette structure rigide comprenant en outre deux caissons latéraux solidaires d'une partie avant du caisson central et incorporant chacun une peau supérieure et une peau inférieure, le mât comportant également une première et une seconde attache moteur avant conçues de manière à reprendre des efforts s'exerçant selon une direction longitudinale du mât, les première et seconde attaches moteur avant étant respectivement agencées sur les deux caissons latéraux.

Ainsi, l'invention proposée permet d'assurer la reprise des efforts de poussée, c'est-à-dire ceux orientés selon la direction longitudinale du mât, par l'intermédiaire des deux caissons latéraux prévus à cet effet. Cette reprise peut être effectuée de manière totalement satisfaisante, dans le sens où les efforts de poussée passant par les première et seconde attaches avant peuvent alors facilement transiter par les peaux de ces caissons, que l'on peut ainsi qualifier de peaux travaillantes. Une fois ces efforts remontés au niveau d'une extrémité supérieure des caissons latéraux, ils arrivent ensuite au caisson central longitudinal à travers lequel ils peuvent être acheminés selon la direction longitudinale, vers l'arrière du mât.

De façon analogue, il est à comprendre que la reprise du moment s'exerçant selon la direction verticale est également parfaitement assurée par les deux caissons latéraux, principalement par l'intermédiaire d'un cadre de fermeture avant et d'un cadre de fermeture arrière prévus sur chacun de ces caissons.

Enfin, il en est de même pour la reprise du moment s'exerçant selon la direction longitudinale du mât, cette reprise devant effectivement être assurée par les caissons latéraux lorsque les première et seconde attaches avant sont aussi conçues de manière à reprendre les efforts s'exerçant selon la direction verticale du mât.

Par ailleurs, comme indiqué ci-dessus, la structure rigide du mât d'accrochage comporte un caisson central longitudinal, également appelé caisson central de torsion, qui s'étend parallèlement à l'axe longitudinal de la surface fictive, et qui est donc solidaire de chacun des caissons latéraux. Bien entendu, la résistance mécanique apportée par ces caissons latéraux permet au caisson central de disposer de dimensions plus faibles que celles pratiquées antérieurement, principalement en ce qui concerne son épaisseur. Cela implique que ce caisson central est également en mesure de ne provoquer que de très faibles perturbations du flux secondaire s'échappant du canal annulaire de soufflante.

A cet égard, il est précisé que le fait de reprendre les efforts de poussée avec les première et seconde attaches moteur avant montées sur les caissons latéraux, et non plus avec un dispositif spécifique du type à bielles latérales de reprise, permet également d'éviter les perturbations du flux secondaire rencontrées antérieurement du fait de la présence de ces bielles latérales en sortie du canal annulaire de soufflante.

Les deux caissons latéraux présentent chacun une peau inférieure délimitant conjointement une partie d'une surface fictive sensiblement cylindrique de section circulaire, et d'axe longitudinal préférentiellement destiné à être confondu avec l'axe longitudinal du turboréacteur.

Ainsi, chacune des deux peaux inférieures dispose donc d'une courbure lui permettant de s'étendre autour de cette surface fictive sensiblement cylindrique de section circulaire. Elles forment par conséquent conjointement un ensemble de la structure rigide qui est avantageusement capable de n'être que très peu contraignant en termes de perturbation du flux secondaire s'échappant du canal annulaire de soufflante du turboréacteur lui étant associé, comparativement aux solutions classiques de l'art antérieur dans lesquelles le mât d'accrochage prenait la forme d'un unique caisson central parallélépipédique de grandes dimensions, disposé de façon très rapprochée du carter central du turboréacteur.

Effectivement, le diamètre de la surface fictive est sensiblement identique à un diamètre d'une surface cylindrique externe du carter de soufflante du turboréacteur associé, impliquant que l'ensemble rigide formé par les peaux inférieures se situent alors sensiblement dans le prolongement de cette surface externe du carter de soufflante, et plus généralement dans le prolongement d'une partie annulaire périphérique de ce carter. Naturellement, dans ce cas précis où les deux caissons latéraux sont assimilables à une portion d'enveloppe sensiblement cylindrique de section circulaire et de diamètre proche de celui du carter de soufflante, les perturbations du flux secondaire susceptibles d'être provoquées par ces caissons sont extrêmement faibles, voire quasiment inexistantes.

Cela permet alors avantageusement d'obtenir des gains en traînée, en rendement du turboréacteur, ainsi qu'en consommation de carburant.

A titre indicatif, il est noté que si les deux caissons latéraux sont assimilables de façon générale à une portion d'une enveloppe sensiblement cylindrique de section circulaire, elle prend de préférence la forme d'une portion d'une enveloppe sensiblement cylindrique de section semi-circulaire. Naturellement, cette forme préférée est tout à fait adaptée pour assurer un montage aisé du turboréacteur sur la structure rigide du mât d'accrochage.

D'autre part, comme indiqué ci-dessus, le caisson central longitudinal situé entre les deux caissons latéraux est agencé de manière à n'engendrer que de très faibles perturbations du flux secondaire. Pour ce faire, on peut prévoir que seule une infime portion de sa partie inférieure fait saillie à l'intérieur de la surface fictive.

De préférence, chaque caisson latéral est fermé vers l'avant par un cadre de fermeture avant orienté selon un plan défini par une direction transversale ainsi qu'une direction verticale du mât. Dans un tel cas, on peut alors prévoir que les première et seconde attaches moteur avant sont respectivement solidaires des deux cadres de fermeture avant des caissons latéraux, ce qui permet d'envisager un montage aisé de ces deux attaches avant sur le carter de soufflante du turboréacteur.

Toujours de manière préférentielle, les première et seconde attaches moteur avant sont traversées par un plan défini par l'axe longitudinal de la surface fictive et une direction transversale de ce mât. Ainsi, il doit être compris que cette spécificité permet avantageusement d'effectuer la reprise des efforts de poussée au niveau de l'axe du turboréacteur, impliquant de ce fait une diminution notable de la flexion longitudinale de ce dernier.

De manière préférée, comme cela a été évoqué précédemment, les première et seconde attaches moteur avant sont chacune conçues de manière à reprendre des efforts s'exerçant selon la direction longitudinale du mât, ainsi que selon la direction verticale de ce mât. Dans cette configuration, on peut alors prévoir que le mât comprend une pluralité d'attaches moteur constituée des première et seconde attaches moteur avant situées de façon symétrique par rapport à un plan défini par l'axe longitudinal de la surface fictive et la direction verticale de ce mât, d'une troisième attache moteur avant traversée par ce même plan, et d'une attache moteur arrière solidaire du caisson central longitudinal.

Ainsi, toutes les attaches moteur avant sont destinées à être montées sur le carter de soufflante, ce qui offre la possibilité de les écarter fortement les unes des autres. Cet écartement important a pour avantage de pouvoir simplifier considérablement la conception de ces attaches moteur, en raison du fait que les efforts qu'elles doivent reprendre, associés à un moment selon un axe donné, sont naturellement affaiblis par rapport à ceux rencontrés dans les solutions classiques de l'art antérieur dans lesquelles les attaches moteur situées sur le carter central ne pouvaient pas être aussi éloignées les unes des autres.

En outre, ces attaches avant peuvent avantageusement être situées à distance de la partie chaude du turboréacteur, ce qui implique une diminution significative des effets thermiques susceptibles de s'appliquer sur ces éléments.

D'autre part, avec une telle disposition qui ne requiert d'ailleurs plus la présence d'un dispositif de reprise des efforts de poussée du type à bielles latérales, la reprise de l'ensemble des efforts générés par le turboréacteur s'effectue essentiellement sur le carter de soufflante à l'aide des première, seconde et troisième attaches moteur avant, car l'unique liaison conservée entre le mât et le carter central ou le carter d'éjection est constituée par l'attache moteur arrière, dont le rôle principal est de limiter les oscillations verticales de la partie arrière du turboréacteur.

Ainsi, cette disposition particulière des attaches moteur induit une diminution considérable de la flexion rencontrée au niveau du carter central, que cette flexion soit due aux efforts de poussée générés par le turboréacteur, ou bien due aux rafales susceptibles d'être rencontrées durant les diverses phases de vol de l'aéronef.

Par conséquent, la diminution de flexion susvisée engendre une baisse significative des frottements entre les pales tournantes de compresseur et de turbine et le carter central du moteur, et limite donc grandement les pertes de rendement dues à l'usure de ces pales.

Dans ce cas où la pluralité d'attaches moteur constitue un système de montage isostatique, la troisième attache avant est conçue de manière à reprendre uniquement des efforts s'exerçant selon la direction transversale du mât, et l'attache moteur arrière est conçue de manière à reprendre uniquement des efforts s'exerçant selon la direction verticale de ce mât.

Ainsi, la seule attache moteur qui n'est pas montée sur le carter de soufflante du moteur est l'attache moteur arrière, conçue de manière à reprendre uniquement les efforts s'exerçant selon la direction verticale du turboréacteur. Cela implique que si cette dernière est effectivement située dans le canal annulaire de flux secondaire, sa fonction limitée à la reprise des efforts verticaux engendre un encombrement relativement peu conséquent, de sorte que les perturbations du flux secondaire provoquées par cette attache arrière ne sont que très minimes. Ainsi, cela permet d'obtenir un gain significatif en termes de performances globales du moteur.

De plus, dans cette configuration où l'attache arrière reprenant uniquement les efforts verticaux est la seule attache moteur située dans le canal annulaire de flux secondaire, on peut alors prévoir que les première, seconde et troisième attaches moteur sont fixées sur une partie annulaire périphérique du carter de soufflante, ce qui leur permet d'occuper des positions dans lesquelles elles sont avantageusement très éloignées les unes des autres.

Une alternative consiste à prévoir que le mât comprend une pluralité d'attaches moteur constituée des première et seconde attaches moteur avant situées de façon symétrique par rapport à un plan défini par l'axe longitudinal de la surface fictive et la direction verticale de ce mât, et d'une attache moteur arrière solidaire du caisson central longitudinal, la troisième attache avant étant par conséquent supprimée.

Ainsi, toujours dans le but d'obtenir une pluralité d'attaches moteur formant un système de montage isostatique, l'attache moteur arrière est alors conçue de manière à reprendre des efforts s'exerçant selon la direction transversale du mât, et également selon la direction verticale de ce mât.

L'invention a également pour objet un aéronef comprenant au moins un mât d'accrochage tel que celui qui vient d'être présenté.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue de côté d'un ensemble moteur pour aéronef, comprenant un mât d'accrochage selon un mode de réalisation préféré de la présente invention ;
- la figure 2 représente une vue schématique en perspective de l'ensemble représenté sur la figure 1, la structure rigide du mât d'accrochage ayant été retirée pour laisser plus clairement apparaître les attaches moteur de ce même mât ;
- la figure 3 représente une vue partielle et agrandie en perspective du mât d'accrochage selon le mode de réalisation préféré ;
- la figure 4 représente une vue en coupe prise selon la plan transversal P1 de la figure 3 ;
- la figure 5 représente une vue en perspective destinée à expliquer la forme des caisson latéraux prévus pour constituer partiellement le mât d'accrochage de la figure 3 ;
- la figure 6 représente une vue éclatée de celle montrée sur la figure 3 ;
- la figure 7 représente une vue similaire à celle montrée sur la figure 3, à laquelle il a été rajouté une représentation schématique des attaches moteur du mât d'accrochage ; et
- la figure 8 représente une vue similaire à celle montrée sur la figure 2, sur laquelle les attaches moteur du mât d'accrochage se présentent sous la forme d'une alternative.

### EXPOSÉ DÉTAILLÉ DE MODES DE RÉALISATION PARTICULIERS

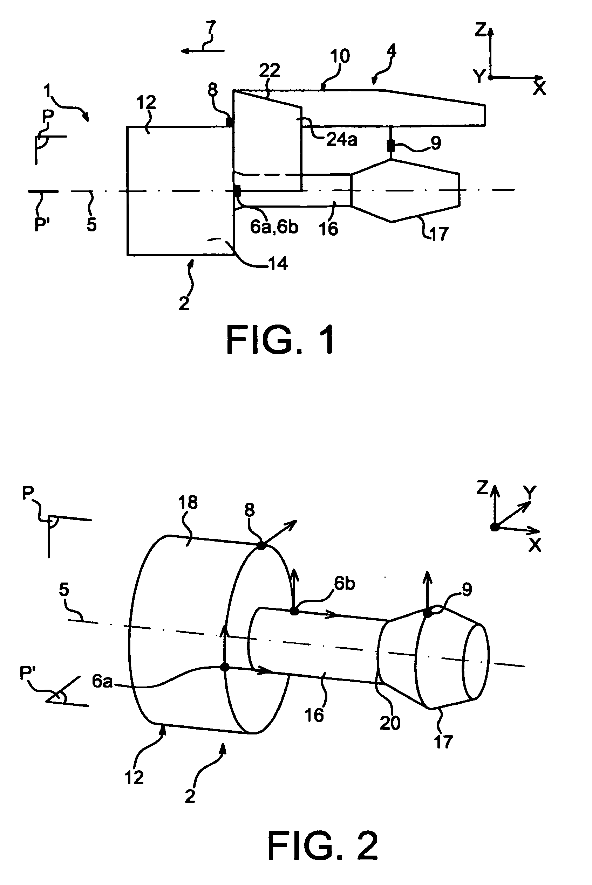

En référence à la figure 1, on voit un ensemble moteur 1 pour aéronef destiné à être fixé sous une aile de cet aéronef (non représenté), cet ensemble 1 comportant un mât d'accrochage 4 selon un premier mode de réalisation préféré de la présente invention.

Globalement, l'ensemble moteur 1 est composé d'un turboréacteur 2 et du mât d'accrochage 4, ce dernier étant muni notamment d'une pluralité d'attaches moteur 6a, 6b, 8, 9 et d'une structure rigide 10 portant ces mêmes attaches (l'attache 6b étant masquée par l'attache 6a sur cette figure 1). A titre indicatif, il est noté que l'ensemble 1 est destiné à être entouré d'une nacelle (non représentée), et que le mât d'accrochage 4 comporte une autre série d'attaches (non représentées) permettant d'assurer la suspension de cet ensemble 1 sous la voilure de l'aéronef.

Dans toute la description qui va suivre, par convention, on appelle X la direction longitudinale du mât 4 qui est également assimilable à la direction longitudinale du turboréacteur 2, cette direction X étant parallèle à un axe longitudinal 5 de ce turboréacteur 2. D'autre part, on appelle Y la direction orientée transversalement par rapport au mât 4 et également assimilable à la direction transversale du turboréacteur 2, et Z la direction verticale ou de la hauteur, ces trois directions X, Y et Z étant orthogonales entre-elles.

D'autre part, les termes « avant » et « arrière » sont à considérer par rapport à une direction d'avancement de l'aéronef rencontrée suite à la poussée exercée par le turboréacteur 2, cette direction étant représentée schématiquement par la flèche 7.

Sur la figure 1, on peut voir que seules les attaches moteur 6a, 6b, 8, 9 et la structure rigide 10 du mât d'accrochage 4 ont été représentées. Les autres éléments constitutifs non représentés de ce mât 4, tels que les moyens d'accrochage de la structure rigide 10 sous la voilure de l'aéronef, ou encore la structure secondaire assurant la ségrégation et le maintien des systèmes tout en supportant des carénages aérodynamiques, sont des éléments classiques identiques ou similaires à ceux rencontrés dans l'art antérieur, et connus de l'homme du métier. Par conséquent, il n'en sera fait aucune description détaillée.

D'autre part, le turboréacteur 2 dispose à l'avant d'un carter de soufflante 12 de grande dimension délimitant un canal annulaire de soufflante 14, et comporte vers l'arrière un carter central 16 de plus petite dimension, renfermant le coeur de ce turboréacteur. Enfin, le carter central 16 se prolonge vers l'arrière par un carter d'éjection 17 de plus grande dimension que celle du carter 16. Les carters 12, 16 et 17 sont bien entendu solidaires les uns des autres. Comme cela ressort de ce qui précède, il s'agit ici préférentiellement d'un turboréacteur disposant d'un fort taux de dilution.

Comme on peut l'apercevoir sur la figure 1, l'une des particularités de l'invention réside dans le fait qu'une première attache moteur avant 6a ainsi qu'une seconde attache moteur avant 6b sont toutes deux destinées à être fixées sur le carter de soufflante 12, de façon symétrique par rapport à un plan P défini par l'axe 5 et la direction Z.

En effet, en référence à présent à la figure 2, on peut voir que la première attache 6a et la seconde attache 6b représentées schématiquement sont disposées de façon symétrique par rapport à ce plan P, et de préférence agencées toutes les deux sur une partie annulaire périphérique du carter de soufflante 12, et plus précisément sur l'arrière de cette même partie.

On peut alors prévoir que les première et seconde attaches moteur avant 6a, 6b sont diamétralement opposées sur la partie annulaire périphérique présentant une surface externe cylindrique 18 du carter de soufflante 12, de sorte que ces attaches 6a, 6b sont donc chacune traversées par un second plan P' défini par l'axe longitudinal 5 et la direction Y.

Comme cela est montré schématiquement par les flèches de la figure 2, chacune des première et seconde attaches moteur avant 6a, 6b est conçue de manière à pouvoir reprendre des efforts générés par le turboréacteur 2 selon la direction X et selon la direction Z, mais pas ceux s'exerçant selon la direction Y.

De cette manière, les deux attaches 6a, 6b fortement éloignées l'une de l'autre assurent conjointement la reprise du moment s'exerçant selon la direction X, et celle du moment s'exerçant selon la direction Z.

Toujours en référence à la figure 2, on peut voir une troisième attache moteur avant 8 représentée schématiquement et aussi fixée sur la partie annulaire périphérique du carter de soufflante 12, également de préférence sur l'arrière de cette partie.

Les attaches 6a, 6b, 8 sont fixées sur la partie annulaire périphérique du carter 12 par l'intermédiaire de parties structurales (non représentées) du moteur, qui sont effectivement de préférence agencées sur l'arrière de la partie annulaire périphérique. Néanmoins, il est également possible de rencontrer des moteurs dont les parties structurales sont situées plus vers l'avant sur la partie annulaire périphérique, impliquant que les attaches 6a, 6b, 8 sont elles aussi fixées plus vers l'avant du moteur, toujours sur la partie annulaire périphérique du carter de soufflante 12.

En ce qui concerne la troisième attache 8, celle-ci se situe sur la partie la plus haute du carter de soufflante 12, donc sur la partie la plus haute de la partie annulaire périphérique, et est par conséquent traversée fictivement par le premier plan P indiqué ci-dessus. En outre, les trois attaches 6a, 6b et 8 sont préférentiellement traversées par un plan YZ (non représenté).

Comme cela est montré schématiquement par les flèches de la figure 2, la troisième attache moteur 8 est conçue de manière à pouvoir reprendre uniquement des efforts générés par le turboréacteur 2 selon la direction Y, et donc pas ceux s'exerçant selon les directions X et Z.

Toujours en référence à la figure 2, on peut voir une attache moteur arrière 9 représentée schématiquement, et fixée entre la structure rigide 10 (non visible sur cette figure) et le carter d'éjection 17, de préférence au niveau de la portion de ce carter 17 ayant le plus grand diamètre. A titre indicatif, il est précisé que cette attache arrière 9 est de préférence traversée fictivement par le premier plan P.

Comme cela est montré schématiquement par les flèches de la figure 2, l'attache moteur arrière 9 est conçue de manière à pouvoir reprendre uniquement des efforts générés par le turboréacteur 2 selon la direction Z, et donc pas ceux s'exerçant selon les directions X et Y.

De cette manière, cette attache 9 assure donc conjointement avec les deux attaches avant 6a, 6b la reprise du moment s'exerçant selon la direction Y.

Naturellement, cette attache arrière 9 pourrait être placée différemment, à savoir sur le carter central 16 du turbomoteur 2, de préférence sur une partie arrière de celui-ci, ou encore au niveau d'une jonction 20 entre le carter central 16 et le carter d'éjection 17.

Dans tous les cas, cette attache arrière 9 est donc située dans un canal annulaire de flux secondaire (non référencé) du turboréacteur à fort taux de dilution. Néanmoins, le fait que sa fonction soit limitée à la reprise des efforts verticaux implique que son encombrement est relativement peu conséquent, de sorte que les perturbations du flux secondaire provoquées par cette attache arrière 9 ne sont que très minimes. Ainsi, cela permet d'obtenir un gain significatif en termes de performances globales du turboréacteur.

Il est noté que si les attaches moteur 6a, 6b, 8 et 9 ont été représentées de façon schématique sur les figures 1 et 2, il est à comprendre que ces attaches peuvent être réalisées selon toute forme connue de l'homme du métier, telle que par exemple celle relative à l'assemblage de manilles et de ferrures.

Comme cela a été évoqué précédemment, un des avantages principaux associés à la configuration qui vient d'être décrite réside dans le fait que la position spécifique des attaches moteur avant 6a, 6b, 8 sur le carter de soufflante 12 entraîne une diminution considérable de la flexion du carter central 16 durant les diverses situations de vol de l'aéronef, et provoque donc une baisse significative de l'usure par frottement des pales de compresseur et de turbine contre ce carter central 16.

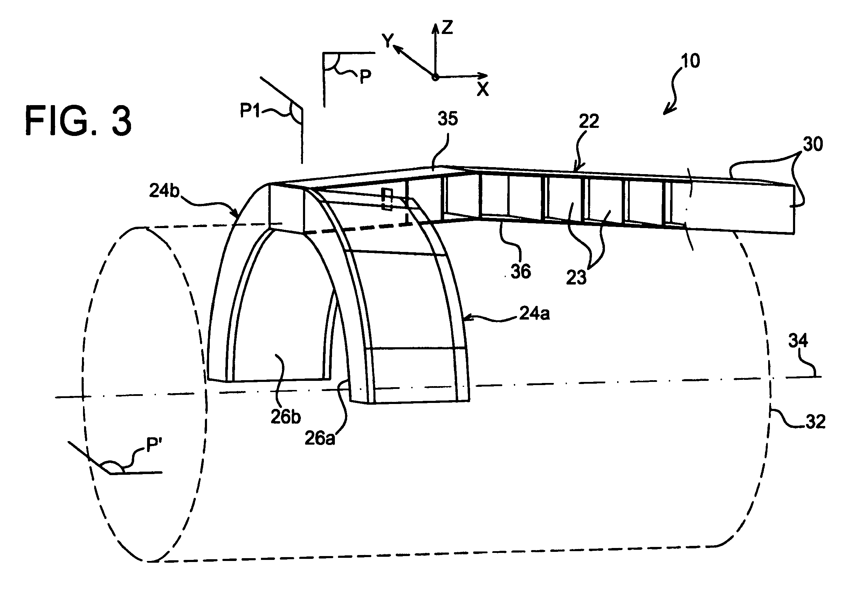

En référence à présent à la figure 3, on voit de façon détaillée la structure rigide 10 du mât d'accrochage 4 objet de la présente invention, les attaches moteur 6a, 6b, 8, 9 ayant volontairement été omises sur cette figure.

Tout d'abord, il est indiqué que cette structure rigide 10 est conçue de manière à présenter une symétrie par rapport au premier plan P indiqué ci-dessus, c'est-à-dire par rapport au plan vertical défini par l'axe longitudinal 5 du turboréacteur 2, et la direction Z.

Cette structure rigide 10 comporte un caisson central longitudinal 22, également appelé caisson de torsion, qui s'étend d'un bout à l'autre de la structure 10 dans la direction X, parallèlement à cette même direction. A titre indicatif, ce caisson 22 peut être formé par l'assemblage de deux longerons latéraux 30 s'étendant selon la direction X dans des plans XZ parallèles, et raccordés entre eux par l'intermédiaire de nervures transversales 23 qui sont quant à elles orientées dans des plans YZ parallèles. En outre, un longeron supérieur 35 et un longeron inférieur 36 sont également prévus pour fermer le caisson 22.

Deux caissons latéraux 24a, 24b viennent compléter la structure rigide 10 dont le caisson central 22 se situe au niveau d'une portion supérieure de cette même structure 10, chacun des deux caissons 24a, 24b étant solidaire du caisson central de torsion 22 et faisant saillie de part et d'autre de celui-ci selon la direction Y, et vers le bas.

L'une des particularités de ces caissons latéraux rapportés solidairement à l'avant du caisson central 22 est qu'ils présentent chacun une peau inférieure 26a, 26b orientée vers le turboréacteur et délimitant conjointement une partie d'une surface fictive 32 sensiblement cylindrique de section circulaire, et d'axe longitudinal 34 parallèle au caisson central 22 et à la direction X, comme cela est visible sur la figure 3.

En d'autres termes, ces deux peaux inférieures 26a, 26b disposent chacune d'une courbure adaptée pour pouvoir se positionner autour et au contact de cette surface fictive 32, sur toute leur longueur. Ainsi, d'une manière générale, les deux caissons 24a, 24b forment ensemble une portion d'une enveloppe/cage sensiblement cylindrique de section circulaire, susceptible d'être positionnée autour et à distance du carter central 16 du turboréacteur 2.

A titre indicatif, il est précisé que l'axe 34 est de préférence confondu avec l'axe longitudinal 5 du turbopropulseur 2. Par conséquent, on peut se rendre compte que la structure rigide 10 présente également une symétrie par rapport au plan vertical défini par l'axe longitudinal 34 et la direction Z du mât 4.

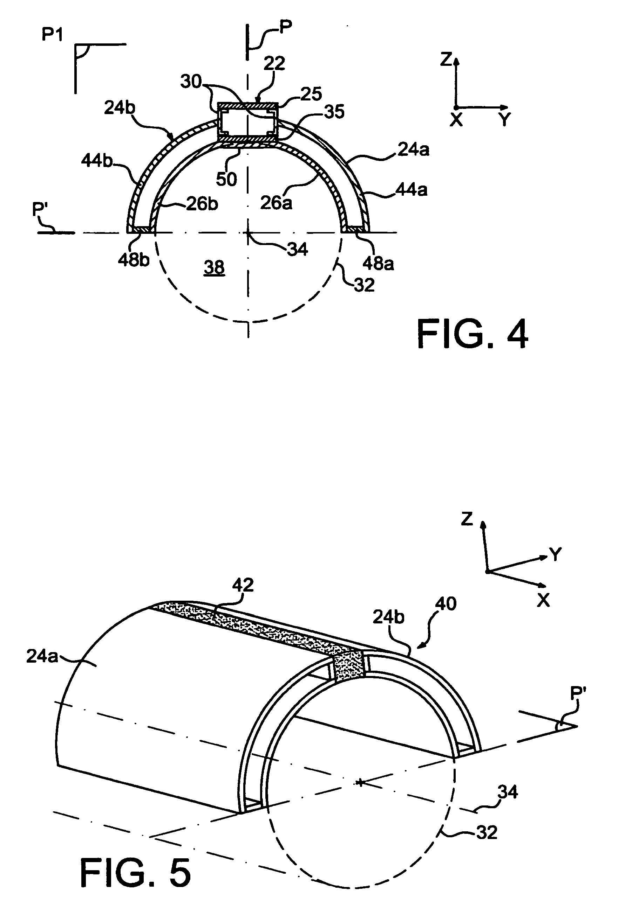

La figure 4 représente une vue en coupe prise selon un plan P1 transversal traversant de façon quelconque les caissons latéraux 24a, 24b.

Sur cette figure, on peut effectivement voir que les deux peaux inférieures 26a, 26b délimitent avec leur surface externe une partie de la surface fictive 32 sensiblement cylindrique de section circulaire, et que les deux caissons 24a, 24b constituent bien une portion d'une enveloppe/cage sensiblement cylindrique de section semi-circulaire centrée sur l'axe longitudinal 34, comme cela sera également décrit en référence à la figure 5.

Il est noté que pour créer le moins de perturbation possible du flux secondaire s'échappant du canal annulaire de soufflante 14, le diamètre de la surface fictive cylindrique 32 est de préférence sensiblement identique au diamètre de la surface externe cylindrique 18 de la partie annulaire du carter de soufflante 12. D'autre part, comme on peut le voir sur la figure 4, les éléments du caisson central 22 ne font saillie que sur une très petite distance à l'intérieur de l'espace 38 délimité par la surface fictive 32, de sorte qu'ils ne perturbent pas non plus significativement l'écoulement du flux d'air secondaire. Cela s'explique notamment par le fait que les longerons latéraux 30 disposent d'une hauteur selon la direction Z qui est extrêmement petite par rapport au diamètre des surfaces fictive 32 et externe 18.

Pour illustrer de façon schématique la forme préférée des caissons latéraux 24a, 24b, la figure 5 montre que ceux-ci constituent conjointement une partie seulement d'une enveloppe/cage 40 sensiblement cylindrique de section semi-circulaire, centrée sur l'axe longitudinal 34 et entourant la moitié supérieure de la surface fictive 32. Ainsi, sur cette figure 5, la partie 42 représentée de façon hachurée correspond à la partie manquant aux deux caissons 24a, 24b pour former le demi-cylindre complet 40. A titre indicatif, il est noté que sur le mât représenté sur les figures 3 et 4, cette partie 42 est en fait remplacée par une partie du caisson central 22 faisant très légèrement saillie à l'intérieur de la surface fictive 32 et joignant les deux caissons 24a, 24b. En outre, cette représentation permet également de comprendre le fait que ces deux caissons latéraux forment sensiblement un prolongement vers l'arrière de la partie annulaire périphérique du carter de soufflante 12.

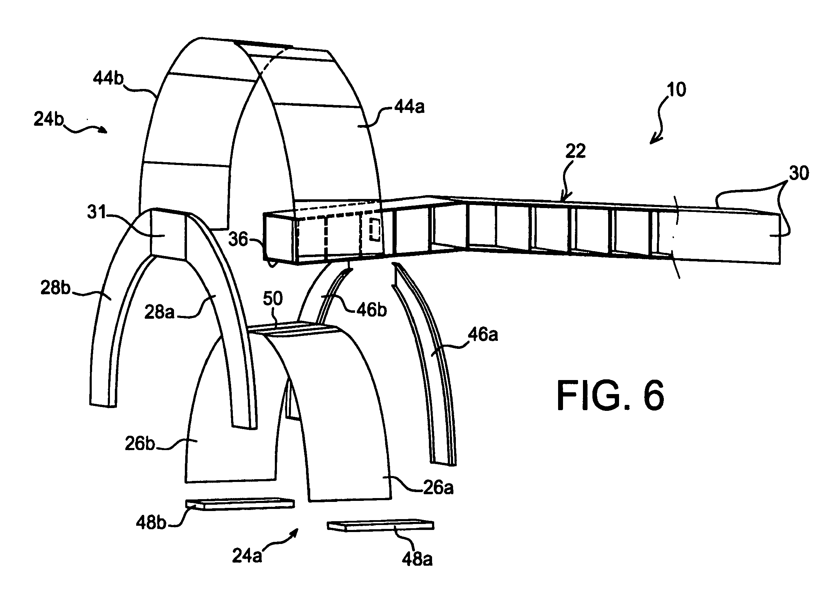

En référence conjointement aux figures 5 et 6, on peut voir que le caisson latéral 24a, identique et symétrique au caisson latéral 24b, comporte la peau inférieure 26a parallèle à la direction X et constituant une portion d'un élément cylindrique de section circulaire, ainsi qu'une peau supérieure 44a également parallèle à la direction X et constituant aussi une portion d'un élément cylindrique de section circulaire. Les peaux 26a et 44a sont de préférence concentriques.

Les peaux 26a, 44a sont raccordées l'une à l'autre par l'intermédiaire d'un cadre de fermeture avant 28a et d'un cadre de fermeture arrière 46a, ces cadres 28a, 46a étant donc orientés transversalement et situés respectivement à l'avant et à l'arrière du caisson 24a. En outre, une plaque de fermeture 48a parallèle au plan P' et de préférence traversée par ce même plan vient fermer une partie inférieure du caisson 24a, et relie donc l'extrémité inférieure des cadres 28a, 46a et des peaux 26a, 44a.

Naturellement, le caisson latéral 24b comporte des éléments 26b, 44b, 28b, 46b et 48b, respectivement identiques aux éléments 26a, 44a, 28a, 46a et 48a du caisson 24a.

Comme on peut le voir sur les figures 5 et 6, on peut prévoir que les deux peaux inférieures 26a, 26b sont réalisées d'un seul tenant et reliées entre elles au niveau de leur partie supérieure par l'intermédiaire d'une plaque de jonction 50 orientée selon un plan XY, et située au contact du longeron inférieur 36 du caisson central 22. Bien entendu, cette plaque 31 de largeur identique à celle du longeron inférieur 36 fait légèrement saillie vers l'intérieur de la surface fictive 32.

De façon analogue, on peut aussi prévoir que les deux cadres de fermeture avant 28a, 28b sont réalisés d'un seul tenant et reliés entre eux au niveau de leur partie supérieure par l'intermédiaire d'un cadre de fermeture avant 31 du caisson 22, ce cadre 31 étant orienté selon un plan YZ. Par conséquent, dans cette configuration, les cadres 28a, 28b, 31 réalisés d'un seul tenant sont donc agencés dans un même plan YZ, et constituent une extrémité avant de la structure rigide 10 du mât 4.

Par ailleurs, il est noté que les extrémités supérieures des cadres 46a, 46b et des peaux 44a, 44b sont montées solidairement sur les longerons latéraux 30 du caisson central 22, par exemple à l'aide de moyens d'assemblage mécaniques.

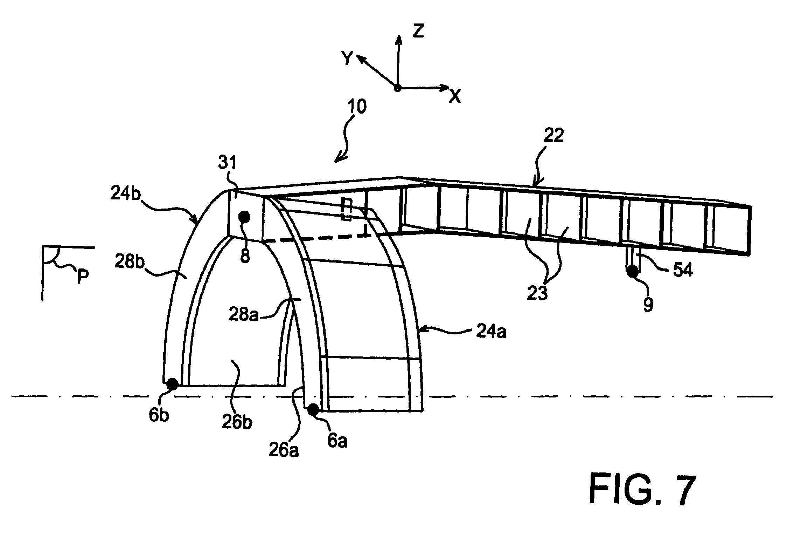

En référence à la figure 7, on voit que la structure rigide 10 du mât d'accrochage 4 est tout à fait adaptée pour supporter les attaches moteur avant 6a, 6b, 8, puisque celles-ci peuvent être facilement fixées sur la pièce transversale réalisée d'un seul tenant intégrant les cadres 28a, 28b et 31. En effet, les première et seconde attaches 6a, 6b sont respectivement fixées aux deux extrémités inférieures des deux cadres de fermeture avant 28a, 28b de façon à être traversées par le plan P', tandis que la troisième attache 8 est solidaire du cadre de fermeture avant 31 situé entre les cadres 28a, 28b précités. De cette manière, il est donc à comprendre que les deux attaches moteur avant 6a, 6b sont disposées de façon symétrique par rapport au plan vertical défini par l'axe longitudinal 34 et la direction Z du mât 4, de même que la troisième attache moteur 8 est traversée par ce même plan identique au premier plan P mentionné précédemment.

L'attache moteur arrière 9 est quant à elle fixée au-dessous du caisson central 22 par l'intermédiaire d'un support 54 solidaire du longeron inférieur 36. Ce support 54 s'étend depuis le longeron inférieur 36, selon la direction Z vers le bas, sur une distance suffisamment importante pour permettre à l'attache 9 de venir se monter sur le carter d'éjection 17 du turboréacteur 2.

A titre d'exemple indicatif, la totalité des éléments constitutifs de la structure rigide 10 qui vient d'être décrite est réalisée à l'aide de matériaux métalliques, tels que l'acier, l'aluminium, le titane, ou encore à l'aide de matériaux composites, de préférence en carbone.

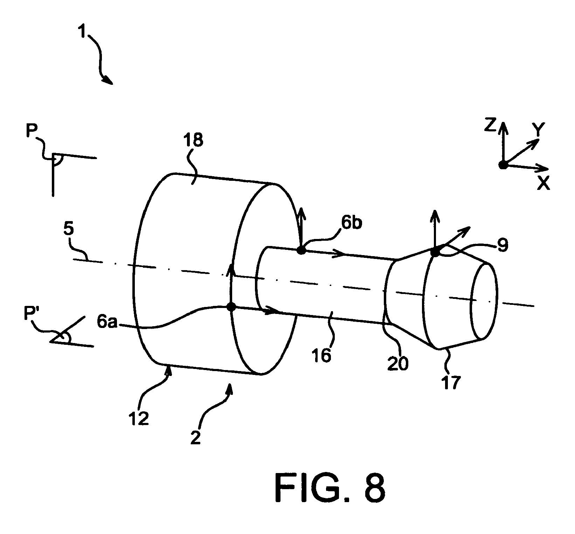

En référence à la figure 8, on peut voir un ensemble moteur 1 pour aéronef selon une alternative du mode de réalisation préféré présenté ci-dessus (la structure rigide du mât d'accrochage n'étant pas représentée).

Cet ensemble est similaire à celui décrit dans le cadre du premier mode de réalisation préféré. Ainsi, les éléments portant les mêmes références numériques correspondent à des éléments identiques ou similaires.

La principale différence présentée par ce second mode de réalisation préféré consiste à supprimer la troisième attache moteur avant, et à prévoir que l'attache moteur arrière 9 assure non seulement la reprise du moment s'exerçant selon la direction Z, mais également celle du moment s'exerçant selon la direction Y. Ainsi, cette alternative procure également une pluralité d'attaches moteur formant un système de montage isostatique.

Bien entendu, diverses modifications peuvent être apportées par l'homme du métier au mât d'accrochage 4 de turboréacteur 2 pour aéronef qui vient d'être décrit, uniquement à titre d'exemple non limitatif. A cet égard, on peut notamment indiquer qui si le mât 4 a été présenté dans une configuration adaptée pour qu'il soit suspendu sous la voilure de l'aéronef, ce mât 4 pourrait également se présenter dans une configuration différente lui permettant d'être monté au-dessus de cette même voilure, voire en partie arrière du fuselage de l'aéronef.

## Revendications

1. Ensemble moteur (1) pour aéronef comprenant un turboréacteur (2) équipé d'un carter de soufflante (12), l'ensemble comportant également un mât d'accrochage (4) du turboréacteur (2), le mât disposant d'une structure rigide (10) comportant un caisson central longitudinal (22), ladite structure rigide (10) comprenant en outre deux caissons latéraux (24a, 24b) solidaires d'une partie avant dudit caisson central (22), ledit mât comportant également une première (6a) et une seconde attache moteur avant (6b) conçues de manière à reprendre des efforts s'exerçant selon une direction longitudinale (X) du mât, lesdites première et seconde attaches moteur avant (6a, 6b) étant respectivement agencées sur les deux caissons latéraux (24a, 24b), et lesdits deux caissons latéraux (24a, 24b) présentant chacun une peau inférieure (26a, 26b) délimitant conjointement une partie d'une surface fictive (32) sensiblement cylindrique de section circulaire et d'axe longitudinal (34),
**caractérisé en ce que**
lesdits deux caissons latéraux (24a, 24b) forment un prolongement vers l'arrière d'une partie annulaire périphérique du carter de soufflante (12), et le diamètre de la surface externe cylindrique (18) de la partie annulaire périphérique du carter de soufflante (12) est sensiblement identique au diamètre de ladite surface fictive (32).

2. Ensemble moteur pour aéronef selon la revendication 1, **caractérisé en ce que** lesdits deux caissons latéraux (24a, 24b) forment conjointement une portion d'une enveloppe (40) sensiblement cylindrique de section semi-circulaire.

3. Ensemble moteur pour aéronef selon l'une quelconque des revendications précédentes, **caractérisé en ce que** chaque caisson latéral (24a, 24b) est fermé vers l'avant par un cadre de fermeture avant (28a, 28b) orienté selon un plan défini par une direction transversale (Y) ainsi qu'une direction verticale (Z) du mât.

4. Ensemble moteur pour aéronef selon la revendication 3, **caractérisé en ce que** lesdites première- et seconde attaches moteur avant (6a, 6b) sont respectivement solidaires des deux cadres de fermeture avant (28a, 28b) des caissons latéraux.

5. Ensemble moteur pour aéronef selon l'une quelconque des revendications précédentes, **caractérisé en ce que** lesdites première et seconde attaches moteur avant (6a, 6b) sont traversées par un plan défini par l'axe longitudinal (34) de la surface fictive (32) et une direction transversale (Y) de ce mât.

6. Ensemble moteur pour aéronef selon l'une quelconque des revendications précédentes, **caractérisé en ce que** les première et seconde attaches moteur avant (6a, 6b) sont chacune conçues de manière à reprendre des efforts s'exerçant selon la direction longitudinale (X) du mât (4), ainsi que selon la direction verticale (Z) de ce mât.

7. Ensemble moteur pour aéronef selon la revendication 6, **caractérisé en ce qu'**il comprend une pluralité d'attaches moteur (6a, 6b, 8, 9) constituée des première et seconde attaches moteur avant (6a, 6b) situées de façon symétrique par rapport à un plan défini par l'axe longitudinal (34) de la surface fictive (32) et une direction verticale (Z) de ce mât, d'une troisième attache moteur avant (8) traversée par ce même plan, et d'une attache moteur arrière (9) solidaire du caisson central longitudinal (22).

8. Ensemble moteur pour aéronef selon la revendication 7, **caractérisé en ce que** ladite troisième attache avant (8) est conçue de manière à reprendre des efforts s'exerçant selon la direction transversale (Y) du mât (4), et **en ce que** ladite attache moteur arrière (9) est conçue de manière à reprendre des efforts s'exerçant selon la direction verticale (Z) de ce mât.

9. Ensemble moteur pour aéronef selon la revendication 6, **caractérisé en ce qu'**il comprend une pluralité d'attaches moteur (6a, 6b, 8, 9) constituée des première et seconde attaches moteur avant (6a, 6b) situées de façon symétrique par rapport à un plan défini par l'axe longitudinal (34) de la surface fictive (32) et une direction verticale (Z) de ce mât, et d'une attache moteur arrière (9) solidaire du caisson central longitudinal (22).

10. Ensemble moteur pour aéronef selon la revendication 9, **caractérisé en ce que** ladite attache moteur arrière (9) est conçue de manière à reprendre des efforts s'exerçant selon la direction transversale (Y) du mât (4), et selon la direction verticale (Z) de ce mât.

11. Ensemble moteur pour aéronef selon la revendication 7 ou la revendication 9, **caractérisé en ce que** ladite pluralité d'attaches moteur (6a, 6b, 8, 9) forme un système de montage isostatique.

12. Aéronef **caractérisé en ce qu'**il comprend au moins un ensemble moteur (1) selon l'une quelconque des revendications précédentes.

## Claims

1. An engine assembly (1) for aircraft comprising a turbine engine (2) equipped with a fan case (12), the assembly also including a pylon (4) for attaching the turbine engine (2), the pylon having a rigid structure (10) including a longitudinal central box (22), said rigid structure (10) further comprising two side boxes (24a, 24b) firmly attached to a front portion of said central box (22), said pylon also including a first (6a) and a second front engine attachment (6b) designed so as to take strains exerted along a longitudinal direction (X) of the pylon, said first and second front engine attachment (6a, 6b) being respectively laid out on both side boxes (24a, 24b) each having a lower skin (26a, 26b) jointly delimiting a portion of a substantially cylindrical fictitious surface (32) with circular section and longitudinal axis (34),
**characterized in that**
said two side boxes (24a, 24b) form a rearward extension of a peripheral annular portion of the fan case (12), and the diameter of the external cylindrical surface (18) of the peripheral annular portion of the fan case (12) is substantially identical with the diameter of said fictitious surface (32).

2. The engine assembly for aircraft according to claim 1, **characterized in that** said two side boxes (24a, 24b) jointly forming a portion of a substantially cylindrical casing (40) with a semi-circular section.

3. The engine assembly for aircraft according to any of the preceding claims, **characterized in that** each side box (24a, 24b) is closed towards the front by a front closing frame (28a, 28b) oriented along a plane defined by a transverse direction (Y) as well as a vertical direction (Z) of the pylon.

4. The engine assembly for aircraft according to claim 3, **characterized in that** said first and second front engine attachments (6a, 6b) are respectively firmly attached to both front closing frames (28a, 28b) of the side boxes.

5. The engine assembly for aircraft according to any of the preceding claims, **characterized in that** said first and second front engine attachments (6a, 6b) are crossed by a plane defined by the longitudinal axis (34) of the fictitious surface (32) and a transverse direction (Y) of this pylon.

6. The engine assembly for aircraft according to any of the preceding claims, **characterized in that** the first and second front engine attachments (6a 6b) are each designed so as to take strains exerted along the longitudinal direction (X) of the pylon (4), as well as along the vertical direction (Z) of this pylon.

7. The engine assembly for aircraft according to claim 6, **characterized in that** it comprises a plurality of engine attachments (6a, 6b, 8, 9) consisting of the first and second front engine attachments (6a, 6b) located symmetrically relative to a plane defined by the longitudinal axis (34) of the fictitious surface (32) and a vertical direction (Z) of this pylon, of a third front engine attachment (8) crossed by this same plane, and of a rear engine attachment (9) firmly attached to the longitudinal central box (22).

8. The engine assembly for aircraft according to claim 7, **characterized in that** said third front attachment (8) is designed so as to take the strains exerted along the transverse direction (Y) of the pylon (4), and **in that** said rear engine attachment (9) is designed so as to take the strains exerted along the vertical direction (Z) of this pylon.

9. The engine assembly for aircraft according to claim 6, **characterized in that** it comprises a plurality of engine attachments (6a, 6b, 8, 9) consisting of the first and second front engine attachments (6a, 6b) located symmetrically relative to a plane defined by the longitudinal axis (34) of the fictitious surface (32) and a vertical direction (Z) of this pylon, and of a rear engine attachment (9) firmly attached to the longitudinal central box (22).

10. The engine assembly for aircraft according to claim 9, **characterized in that** said rear engine attachment (9) is designed so as to take the strains exerted along the transverse direction (Y) of the pylon (4), and along the vertical direction (Z) of this pylon.

11. The engine assembly for aircraft according to claim 7 or claim 9, **characterized in that** said plurality of engine attachments (6a, 6b, 8, 9) forms an isostatic mounting system.

12. An aircraft **characterized in that** it comprises at least one engine assembly (1) according to any of the preceding claims.

## Patentansprüche

1. Triebwerkanordnung (1) für ein Luftfahrzeug, umfassend ein Turbotriebwerk (2), das mit einem Fangehäuse (12) ausgestattet ist, wobei die Anordnung auch ein Aufhängungssystem (4) des Turbotriebwerks (2) aufweist, wobei das System eine starre Struktur (10) aufweist, die eine zentrale Längskammer (22) umfasst, wobei die starre Struktur (10) ferner zwei Seitenkammern (24a, 24b) umfasst, die mit einem Vorderbereich der zentralen Kammer (22) fest verbunden sind, wobei das System auch eine erste (6a) und eine zweite vordere Triebwerkbefestigung (6b) aufweist, die zur Aufnahme von Kräften, die in einer Längsrichtung (X) des Systems auftreten, gestaltet sind, wobei die erste und die zweite vordere Triebwerkbefestigung (6a, 6b) jeweils an den zwei Seitenkammern (24a, 24b) angebracht sind, und die zwei Seitenkammern (24a, 24b) jeweils eine untere Haut (26a, 26b) aufweisen, die gemeinsam einen Teil einer im wesentlichen zylindrischen fiktiven Oberfläche (32) mit kreisförmigem Querschnitt um die Längsachse (34) festlegen,
**dadurch gekennzeichnet, dass**
die zwei Seitenkammern (24a, 24b) eine Verlängerung eines Umfangsringbereichs des Fangehäuses (12) nach hinten bilden und der Durchmesser der zylindrischen Außenfläche (18) des Umfangsringbereichs des Fangehäuses (12) im wesentlichen identisch mit dem Durchmesser der fiktiven Oberfläche (32) ist.

2. Triebwerkanordnung für ein Luftfahrzeug nach Anspruch 1, **dadurch gekennzeichnet, dass** die zwei Seitenkammern (24a, 24b) gemeinsam einen Teil einer im wesentlichen zylindrischen Hülle (40) mit halbkreisförmigem Querschnitt bilden.

3. Triebwerkanordnung für ein Luftfahrzeug nach einem der vorhergehenden Ansprüche, **dadurch gekennzeichnet, dass** jede Seitenkammer (24a, 24b) nach vorne durch einen vorderen Verschlussrahmen (28a, 28b) abgeschlossen ist, der in einer durch eine Querrichtung (Y) sowie eine Vertikalrichtung (Z) des Systems festgelegten Ebene ausgerichtet ist.

4. Triebwerkanordnung für ein Luftfahrzeug nach Anspruch 3, **dadurch gekennzeichnet, dass** die erste und die zweite vordere Triebwerkbefestigung (6a, 6b) mit den zwei vorderen Verschlussrahmen (28a, 28b) der Seitenkammern jeweils fest verbunden sind.

5. Triebwerkanordnung für ein Luftfahrzeug nach einem der vorhergehenden Ansprüche, **dadurch gekennzeichnet, dass** durch die erste und die zweite vordere Triebwerkbefestigung (6a, 6b) eine durch die Längsachse (34) der fiktiven Oberfläche (32) und eine Querrichtung (Y) dieses Systems festgelegte Ebene geht.

6. Triebwerkanordnung für ein Luftfahrzeug nach einem der vorhergehenden Ansprüche, **dadurch gekennzeichnet, dass** die erste und die zweite vordere Triebwerkbefestigung (6a, 6b) jeweils zur Aufnahme von Kräften, die in der Längsrichtung (X) des Systems (4) sowie der Vertikalrichtung (Z) dieses Systems auftreten, gestaltet sind.

7. Triebwerkanordnung für ein Luftfahrzeug nach Anspruch 6, **dadurch gekennzeichnet, dass** sie mehrere Triebwerkbefestigungen (6a, 6b, 8, 9) umfasst, die aus ersten und zweiten vorderen Triebwerkbefestigungen (6a, 6b), die in Bezug auf eine durch die Längsachse (34) der fiktiven Oberfläche (32) und eine Vertikalrichtung (Z) dieses Systems festgelegte Ebene symmetrisch angeordnet sind, einer dritten vorderen Triebwerkbefestigung (8), durch die dieselbe Ebene geht, und einer hinteren Triebwerkbefestigung (9), die mit der zentralen Längskammer (22) fest verbunden ist, bestehen.

8. Triebwerkanordnung für ein Luftfahrzeug nach Anspruch 7, **dadurch gekennzeichnet, dass** die dritte vordere Befestigung (8) zur Aufnahme von Kräften, die in der Querrichtung (Y) des Systems (4) auftreten, gestaltet ist, und die hintere Triebwerkbefestigung (9) zur Aufnahme von Kräften, die in der Vertikalrichtung (Z) dieses Systems auftreten, gestaltet ist.

9. Triebwerkanordnung für ein Luftfahrzeug nach Anspruch 6, **dadurch gekennzeichnet, dass** sie mehrere Triebwerkbefestigungen (6a, 6b, 8, 9) umfasst, die aus ersten und zweiten vorderen Triebwerkbefestigungen (6a, 6b), die in Bezug auf eine durch die Längsachse (34) der fiktiven Oberfläche (32) und eine Vertikalrichtung (Z) dieses Systems festgelegte Ebene symmetrisch angeordnet sind, und einer hinteren Triebwerkbefestigung (9), die mit der zentralen Längskammer (22) fest verbunden ist, bestehen.

10. Triebwerkanordnung für ein Luftfahrzeug nach Anspruch 9, **dadurch gekennzeichnet, dass** die hintere Triebwerkbefestigung (9) zur Aufnahme von Kräften, die in der Querrichtung (Y) des Systems (4) und in der Vertikalrichtung (Z) des Systems auftreten, gestaltet ist.

11. Triebwerkanordnung für ein Luftfahrzeug nach Anspruch 7 oder Anspruch 9, **dadurch gekennzeichnet, dass** die mehreren Triebwerkbefestigungen (6a, 6b, 8, 9) ein isostatisches Montagesystem bilden.

12. Luftfahrzeug, **dadurch gekennzeichnet, dass** es mindestens eine Triebwerkanordnung (1) nach einem der vorhergehenden Ansprüche umfasst.
